# EUROPEAN PATENT APPLICATION

(11) **EP 4 851 260 A1**
(43) Date of publication of application: **09.12.2026**
(21) Application number: 25748134.1
(22) Date of filing: 24.01.2025
(51) Int. Cl.: C09K 3/00, C08B 15/04, C09C 3/06, C09D 7/65, C09D 11/037, C09D 201/00, D06M 11/83, G02B 5/22

(54) **NEAR-INFRARED ABSORBING MATERIAL, INK, COATING MATERIAL AND MOLDED ARTICLE EACH USING NEAR-INFRARED ABSORBING MATERIAL, DISPLAY ARTICLE, ARTICLE, AND METHOD FOR DETERMINING AUTHENTICITY OF ARTICLE**

(30) Priority: 01.02.2024 JP 2024014233
(71) Applicant: Zeon Corporation, Tokyo 100-8246 (JP)
(72) Inventor: SONE, Atsushi, Tokyo 100-8246 (JP)
(74) Representative: Maiwald GmbH
(86) International application number: PCT/JP2025/002323
(87) International publication number: WO 2025/164552

(57) **Abstract**

Provided is a novel near-infrared absorbing material having sufficiently high near-infrared absorption ability. The near-infrared absorbing material is composed of copper-containing oxidized cellulose nanofibers that have a number-average fiber diameter of 100 nm or less and contain copper as a salt. An ink and a coating material contain this near-infrared absorbing material. A shaped item is composed of this near-infrared absorbing material. A display item is obtained using this ink, coating material, or shaped item. An article includes this display item. A method of distinguishing authenticity of an article uses this near-infrared absorbing material.

## Description

### TECHNICAL FIELD

The present disclosure relates to a near-infrared absorbing material, an ink, coating material, and shaped item using a near-infrared absorbing material, a display item, an article, and a method of distinguishing authenticity of an article.

### BACKGROUND

In recent years, near-infrared absorbing materials have been used in a wide range of fields such as optical recording media, near-infrared light sensitizers, photothermal conversion agents, near-infrared absorption filters, image sensors, optical filters for optical sensors used in facial recognition, fingerprint recognition, etc., near-infrared absorbing inks, heat-ray shielding materials, and so forth. In particular, there is increasing demand for the development of near-infrared absorbing materials having high near-infrared absorption ability in applications such as transparent inks used for the purpose of security.

Various organic dyes such as phthalocyanine compounds, cyanine compounds, diimmonium compounds, and squarylium compounds are being studied as such near-infrared absorbing materials.

For example, Patent Literature (PTL) 1 discloses a near-infrared absorbing material that contains a squarylium compound having a specific structure.

### CITATION LIST

### Patent Literature

PTL 1: JP2021-085024A

### SUMMARY

### (Technical Problem)

However, there has been demand for the development of near-infrared absorbing materials other than organic dyes in recent years.

Accordingly, one object of the present disclosure is to provide a novel near-infrared absorbing material having sufficiently high near-infrared absorption ability.

Another object of the present disclosure is to provide an ink and a coating material containing this near-infrared absorbing material.

Another object of the present disclosure is to provide a shaped item composed of this near-infrared absorbing material.

Another object of the present disclosure is to provide a display item obtained using this ink, coating material, or shaped item.

Another object of the present disclosure is to provide an article including this display item.

Another object of the present disclosure is to provide a method of distinguishing authenticity of an article.

### (Solution to Problem)

The inventor conducted diligent investigation with the aim of solving the problem set forth above. The inventor made a new discovery that the problem set forth above can be solved with a near-infrared absorbing material that is composed of copper-containing oxidized cellulose nanofibers that have a specific number-average fiber diameter and contain copper as a salt, and, in this manner, the inventor completed the present disclosure.

Specifically, with the aim of advantageously solving the problem set forth above, [1] a presently disclosed near-infrared absorbing material comprises copper-containing oxidized cellulose nanofibers that have a number-average fiber diameter of 100 nm or less and contain copper as a salt. A near-infrared absorbing material that is composed of the specific copper-containing oxidized cellulose nanofibers set forth above has excellent near-infrared absorption ability.

The "number-average fiber diameter" of copper-containing oxidized cellulose nanofibers referred to in the present disclosure can be determined by measuring the fiber diameters of 5 or more copper-containing oxidized cellulose nanofibers using an atomic force microscope, and calculating the number-average of the measured fiber diameters. A Dimension FastScan AFM (produced by Bruker Corporation; tapping mode), for example, can be used as the atomic force microscope.

[2] In the near-infrared absorbing material according to the foregoing [1], the copper-containing oxidized cellulose nanofibers preferably have a number-average fiber length of not less than 50 nm and not more than 2,000 nm. When the number-average fiber length of the copper-containing oxidized cellulose nanofibers is not less than the lower limit set forth above, sufficiently high mechanical strength can be imparted to a shaped item, such as a film, that is composed of the near-infrared absorbing material. On the other hand, when the number-average fiber length of the copper-containing oxidized cellulose nanofibers is not more than the upper limit set forth above, dispersibility of the copper-containing oxidized cellulose nanofibers is ensured, and transparency of an obtained shaped item can be improved while also imparting even better near-infrared absorption ability to the near-infrared absorbing material.

The "number-average fiber length" of copper-containing oxidized cellulose nanofibers referred to in the present specification can be determined by measuring the fiber lengths of 5 or more copper-containing oxidized cellulose nanofibers using an atomic force microscope, and calculating the number-average of the measured fiber lengths. A Dimension FastScan AFM (produced by Bruker Corporation; tapping mode), for example, can be used as the atomic force microscope.

[3] In the near-infrared absorbing material according to the foregoing [1] or [2], the copper-containing oxidized cellulose nanofibers preferably have an average degree of polymerization of not less than 100 and not more than 2,000. When the average degree of polymerization of the copper-containing oxidized cellulose nanofibers is not less than the lower limit set forth above, sufficiently high mechanical strength can be imparted to a shaped item such as a film. On the other hand, when the average degree of polymerization of the copper-containing oxidized cellulose nanofibers is not more than the upper limit set forth above, dispersibility of the copper-containing oxidized cellulose nanofibers is ensured, and transparency of an obtained shaped item can be improved while also imparting even better near-infrared absorption ability to the near-infrared absorbing material.

The "average degree of polymerization" of copper-containing oxidized cellulose nanofibers referred to in the present specification can be measured in accordance with Isogai, A., Mutoh, N., Onabe, F., Usuda, M., "Viscosity measurements of cellulose/SO2-amine-dimethylsulfoxide solution", Sen'i Gakkaishi, 45, 299-306 (1989), for example.

[4] In the near-infrared absorbing material according to any one of the foregoing [1] to [3], the copper-containing oxidized cellulose nanofibers are preferably copper-containing carboxylated cellulose nanofibers. When the copper-containing oxidized cellulose nanofibers are copper-containing carboxylated cellulose nanofibers, dispersibility of the copper-containing oxidized cellulose nanofibers is ensured, and transparency of an obtained shaped item can be improved while also imparting even better near-infrared absorption ability to the near-infrared absorbing material.

Moreover, with the aim of advantageously solving the problem set forth above, [5] a presently disclosed ink comprises the near-infrared absorbing material according to any one of the foregoing [1] to [4]. An ink that contains the near-infrared absorbing material set forth above has excellent near-infrared absorption ability.

Furthermore, with the aim of advantageously solving the problem set forth above, [6] a presently disclosed coating material comprises the near-infrared absorbing material according to any one of the foregoing [1] to [4]. A coating material that contains the near-infrared absorbing material set forth above has excellent near-infrared absorption ability.

Also, with the aim of advantageously solving the problem set forth above, [7] a presently disclosed shaped item comprises the near-infrared absorbing material according to any one of the foregoing [1] to [4]. A shaped item that is composed of the near-infrared absorbing material set forth above has excellent near-infrared absorption ability.

Moreover, with the aim of advantageously solving the problem set forth above, [8] a presently disclosed display item is obtained using the ink according to the foregoing [5], the coating material according to the foregoing [6], or the shaped item according to the foregoing [7]. A display item that is obtained using the ink, coating material, or shaped item set forth above has excellent near-infrared absorption ability.

Furthermore, with the aim of advantageously solving the problem set forth above, [9] a presently disclosed article comprises the display item according to the foregoing [8]. An article that includes the display item set forth above has excellent near-infrared absorption ability.

Also, with the aim of advantageously solving the problem set forth above, [10] a presently disclosed method of distinguishing authenticity of an article comprises: using the near-infrared absorbing material according to any one of the foregoing [1] to [4] to impart, to an authentic article, a mark that cannot be visually distinguished; acquiring a near-infrared image of an article that is an inspection subject; and judging an article displaying the mark in the near-infrared image to be an authentic article and judging an article not displaying the mark in the near-infrared image to be an inauthentic article. Through the presently disclosed method of distinguishing authenticity, it is possible to easily distinguish authenticity of an article.

### (Advantageous Effect)

According to the present disclosure, it is possible to provide a novel near-infrared absorbing material having sufficiently high near-infrared absorption ability.

Moreover, according to the present disclosure, it is possible to provide an ink and a coating material containing this near-infrared absorbing material.

Furthermore, according to the present disclosure it is possible to provide a shaped item composed of this near-infrared absorbing material.

Also, according to the present disclosure, it is possible to provide a display item obtained using this ink, coating material, or shaped item.

Moreover, according to the present disclosure, it is possible to provide an article including this display item.

Furthermore, according to the present disclosure, it is possible to provide a method of distinguishing authenticity of an article.

### BRIEF DESCRIPTION OF THE DRAWINGS

In the accompanying drawings:
FIG. 1 is a schematic diagram of an imaging device 1 used in examples and comparative examples; and
FIG. 2 is a schematic diagram of an imaging device 2 used in examples and comparative examples.

### DETAILED DESCRIPTION

The following provides a detailed description of embodiments of the present disclosure.

The presently disclosed near-infrared absorbing material can suitably be used in production of the presently disclosed ink, coating material, and shaped item, for example. The presently disclosed ink can suitably be used as a security ink for preventing counterfeiting of printed matter, for example. The presently disclosed coating material can suitably be used as a heat shielding coating material that is applied to an exterior wall or the like with the aim of shielding from heat or a security coating material for preventing counterfeiting, for example. The presently disclosed shaped item can suitably be used in the form of a transparent film as a near-infrared absorption filter (near-infrared cutting filter) that is attached to a dye-sensitized solar cell, glasses, sunglasses, or the like with the aim of absorbing and/or cutting near-infrared radiation, for example. The presently disclosed display item can suitably be used for distinguishing an article that includes the aforementioned display item, for example. The presently disclosed article can suitably be used as a security article, for example. The presently disclosed method of distinguishing authenticity can suitably be used to distinguish authenticity of an article.

### (Near-infrared absorbing material)

The presently disclosed near-infrared absorbing material is composed of copper-containing oxidized cellulose nanofibers that have a number-average fiber diameter of 100 nm or less and contain copper as a salt. A near-infrared absorbing material such as set forth above has excellent near-infrared absorption ability.

Note that since the presently disclosed near-infrared absorbing material is composed of specific copper-containing oxidized cellulose nanofibers, the presently disclosed near-infrared absorbing material does not normally contain components other than impurities that are unavoidably mixed in during production. The proportional content of the copper-containing oxidized cellulose nanofibers in the presently disclosed near-infrared absorbing material is normally 99 mass% or more, preferably 99.5 mass% or more, and more preferably 99.9 mass% or more.

### <Copper-containing oxidized cellulose nanofibers containing copper as salt>

The constituent copper-containing oxidized cellulose nanofibers of the presently disclosed near-infrared absorbing material contain copper as a salt. By using such copper-containing oxidized cellulose nanofibers, it is possible to cause the near-infrared absorbing material to display excellent near-infrared absorption ability.

Note that the copper-containing oxidized cellulose nanofibers that contain copper as a salt are also referred to below simply as "copper-containing oxidized cellulose nanofibers".

The copper-containing oxidized cellulose nanofibers are preferably copper-containing carboxylated cellulose nanofibers. When the copper-containing oxidized cellulose nanofibers are copper-containing carboxylated cellulose nanofibers, dispersibility of the copper-containing oxidized cellulose nanofibers is ensured, and transparency of an obtained shaped item can be improved while also imparting even better near-infrared absorption ability to the near-infrared absorbing material.

Note that the constituent carboxylated cellulose nanofibers of the aforementioned copper-containing carboxylated cellulose nanofibers are cellulose nanofibers where a primary hydroxy group at the 6-position of a β-glucose unit in raw material cellulose has been oxidized to a carboxy group via an aldehyde group. From a viewpoint of sufficiently imparting desired characteristics to the copper-containing carboxylated cellulose nanofibers, it is preferable that 50 mol% or more of such primary hydroxy groups in the carboxylated cellulose nanofibers are oxidized to carboxy groups, with oxidation of 70 mol% or more being more preferable, and 90 mol% or more even more preferable.

Note that the carboxy group content of the copper-containing carboxylated cellulose nanofibers can be measured according to a method described in JP2016-141777A or JP2019-199622A.

No limitations are placed on the amount of copper in the copper-containing oxidized cellulose nanofibers so long as the desired near-infrared absorption ability can be imparted to the near-infrared absorbing material. For example, in the copper-containing carboxylated cellulose nanofibers described above, copper is preferably present in a proportion of at least 1/3 of the molar amount of carboxy groups in the carboxylated cellulose nanofibers, and more preferably a proportion of at least 1/2 of the molar amount of carboxy groups. A higher proportional content of copper in the copper-containing oxidized cellulose nanofibers makes it possible to improve near-infrared absorption ability of the near-infrared absorbing material.

Note that copper in the copper-containing oxidized cellulose nanofibers can be qualitatively and quantitatively determined by ICP-AES according to a method described in JP2016-141777A or JP2019-199622A, for example.

The copper-containing oxidized cellulose nanofibers are required to have a number-average fiber diameter of 100 nm or less. By using such copper-containing oxidized cellulose nanofibers, it is possible to impart excellent near-infrared absorption ability to the near-infrared absorbing material.

Moreover, the number-average fiber diameter of the copper-containing oxidized cellulose nanofibers is preferably 50 nm or less, more preferably 10 nm or less, and even more preferably 5 nm or less.

The number-average fiber diameter of the copper-containing oxidized cellulose nanofibers is 0.5 nm or more, for example, and may be 1 nm or more.

The number-average fiber length of the copper-containing oxidized cellulose nanofibers is preferably 50 nm or more, more preferably 70 nm or more, even more preferably 100 nm or more, and further preferably 400 nm or more, and is preferably 2,000 nm or less, more preferably 1,500 nm or less, even more preferably 1,000 nm or less, and further preferably 600 nm or less.

When the number-average fiber length of the copper-containing oxidized cellulose nanofibers is not less than any of the lower limits set forth above, sufficiently high mechanical strength can be imparted to a shaped item, such as a film, that is obtained using the near-infrared absorbing material. On the other hand, when the number-average fiber length of the copper-containing oxidized cellulose nanofibers is not more than any of the upper limits set forth above, dispersibility of the copper-containing oxidized cellulose nanofibers is ensured, and transparency of an obtained shaped item can be improved while also imparting even better near-infrared absorption ability to the near-infrared absorbing material.

Note that the number-average fiber length of the copper-containing oxidized cellulose nanofibers can be adjusted by, for example, changing the number-average fiber length or oxidation treatment conditions of the native cellulose used as a raw material and/or the conditions used for dispersing (defibrating) the carboxylated cellulose nanofibers after the oxidation treatment. Specifically, by prolonging the time for dispersing treatment (defibrating treatment), the number-average fiber length can be reduced.

The average degree of polymerization of the copper-containing oxidized cellulose nanofibers (average value of the number of glucose units included in a cellulose molecule) is preferably 100 or more, more preferably 300 or more, and even more preferably 500 or more, and is preferably 2,000 or less, more preferably 1,500 or less, even more preferably 1,000 or less, and further preferably 700 or less.

When the average degree of polymerization of the copper-containing oxidized cellulose nanofibers is not less than any of the lower limits set forth above, sufficiently high mechanical strength can be imparted to a shaped item such as a film.

On the other hand, when the average degree of polymerization of the copper-containing oxidized cellulose nanofibers is not more than any of the upper limits set forth above, dispersibility of the copper-containing oxidized cellulose nanofibers is ensured, and transparency of an obtained shaped item can be improved while also imparting even better near-infrared absorption ability to the near-infrared absorbing material.

Note that the average degree of polymerization of the copper-containing oxidized cellulose nanofibers can be adjusted by, for example, changing the average degree of polymerization or oxidation treatment conditions of native cellulose used as a raw material, the conditions used for dispersing (defibrating) the carboxylated cellulose nanofibers after the oxidation treatment, and/or the conditions for dispersing (defibrating) the carboxylated cellulose nanofibers after a copper substitution step.

The copper-containing oxidized cellulose nanofibers described above can be produced according to a method described in JP2016-141777A or JP2019-199622A, for example.

Note that copper-containing oxidized cellulose nanofibers produced as described above are normally obtained as a dispersion liquid having the copper-containing oxidized cellulose nanofibers dispersed in a dispersion medium such as water.

### <Properties>

The light transmittance of light having a wavelength of 550 nm in the presently disclosed near-infrared absorbing material is preferably 70% or more, more preferably 80% or more, and even more preferably 85% or more.

When the light transmittance of light having a wavelength of 550 nm is not less than any of the lower limits set forth above, visual transparency of the near-infrared absorbing material can be improved.

On the other hand, the light transmittance of light having a wavelength of 550 nm in the near-infrared absorbing material is 99% or less, for example, and may be 95% or less, or may be 90% or less.

The light transmittance of light having a wavelength of 800 nm in the presently disclosed near-infrared absorbing material is preferably 83% or less, more preferably 80% or less, even more preferably 66.3% or less, and particularly preferably 60% or less.

When this value is not more than any of the upper limits set forth above, the near-infrared absorbing material has excellent near-infrared absorption ability.

On the other hand, the light transmittance of light having a wavelength of 800 nm in the near-infrared absorbing material is 10% or more, for example, and may be 20% or more, or may be 30% or more.

The presently disclosed near-infrared absorbing material can be used in various applications such as judging the authenticity of an article because although the presently disclosed near-infrared absorbing material is difficult to visually observe, the presently disclosed near-infrared absorbing material absorbs infrared radiation and can be seen in a near-infrared image.

A value obtained by subtracting the light transmittance of light having a wavelength of 800 nm from the light transmittance of light having a wavelength of 550 nm in the presently disclosed near-infrared absorbing material is preferably 5% or more, more preferably 10% or more, and even more preferably 20% or more.

When this value is not less than any of the lower limits set forth above, light absorption selectivity of the near-infrared absorbing material can be improved.

On the other hand, this value in the near-infrared absorbing material is 80% or less, for example, and may be 60% or less, or may be 50% or less.

The light transmittance of light having a wavelength of 800 nm in the near-infrared absorbing material can be measured by a method described in the EXAMPLES section.

### (Ink)

The presently disclosed ink contains a near-infrared absorbing material and a solvent (dispersion medium) and may optionally further contain one or more components selected from the group consisting of a colorant, a pigment dispersant, and other components.

### <Near-infrared absorbing material>

The near-infrared absorbing material that is contained in the presently disclosed ink can be the presently disclosed near-infrared absorbing material set forth above.

The concentration of the near-infrared absorbing material (copper-containing oxidized cellulose nanofibers) in the ink is preferably 0.20 mass% or more, more preferably 0.25 mass% or more, and even more preferably 0.28 mass% or more, and is preferably 0.40 mass% or less, and more preferably 0.35 mass% or less. When the concentration of the near-infrared absorbing material in the ink is within any of the ranges set forth above, dispersibility of the copper-containing oxidized cellulose nanofibers can be ensured. Moreover, the change of visibility of a display item due to compounding of the near-infrared absorbing material (i.e., a difference in coloring between a section containing the presently disclosed near-infrared absorbing material and a section not containing the presently disclosed near-infrared absorbing material) can be suppressed. For example, in a case in which the presently disclosed ink is a transparent ink in which a colorant is not compounded, coloring caused by compounding of the near-infrared absorbing material can be suppressed, and visibility of an obtained display item to the naked eye can be reduced. Consequently, the presently disclosed ink can more suitably be used as a security ink.

### <Solvent>

The solvent that is contained in the presently disclosed ink may be water or an organic solvent, for example. The solvent is a component that causes dissolution or dispersion of solid content (near-infrared absorbing material and other components) contained in the presently disclosed ink.

Examples of the organic solvent include, but are not specifically limited to, alcohols such as ethanol, propanol, isopropyl alcohol, ethylene glycol, and propylene glycol; hydrocarbons such as hexane, cyclohexane, toluene, and xylene; halogenated hydrocarbons such as methylene chloride and chloroform; ethers such as dimethyl ether, diethyl ether, dioxane, and tetrahydrofuran; esters such as methyl acetate, ethyl acetate, butyl acetate, ethyl lactate, and ethyl butyrate; ketones such as acetone, methyl ethyl ketone, methyl isobutyl ketone, cyclohexanone, cyclopentanone, and N-methyl-2-pyrrolidone; cellosolves such as methyl cellosolve, ethyl cellosolve, and butyl cellosolve; carbitols such as methyl carbitol, ethyl carbitol, and butyl carbitol; propylene glycol monoalkyl ethers such as propylene glycol monomethyl ether, propylene glycol monoethyl ether, and propylene glycol mono-n-butyl ether; glycol ether esters such as ethylene glycol monomethyl ether acetate, propylene glycol monomethyl ether acetate, and ethyl diglycol acetate (EDGAC); amides such as N,N-dimethylformamide and N,N-dimethylacetamide; sulfoxides such as dimethyl sulfoxide; and nitriles such as acetonitrile and benzonitrile. Of these examples, alcohols are preferable, and ethanol is more preferable as the organic solvent.

The solvent preferably includes water and more preferably is water since this enables good dispersion of the copper-containing oxidized cellulose nanofibers in the ink. When water is used as the solvent, in a situation in which the copper-containing oxidized cellulose nanofibers have been obtained in the form of a water dispersion in production of the copper-containing oxidized cellulose nanofibers, for example, the water that is contained in the ink may be water originating from that water dispersion.

Moreover, the solvent may be one type of solvent used individually or may be two or more types of solvents used in combination in a freely selected ratio. In a case in which a mixture of water and an organic solvent is used as the solvent, a mass ratio of the water and the organic solvent (water/organic solvent) is preferably more than 1/1, preferably 2/1 or more, and preferably 4/1 or less from a viewpoint of ensuring dispersibility of the near-infrared absorbing material (copper-containing oxidized cellulose nanofibers).

### <Colorant>

The colorant that is optionally contained in the presently disclosed ink can be any commonly known pigment or dye that is used as a colorant (coloring material) in various inks without any specific limitations.

The pigment can be either an organic pigment or an inorganic pigment. Examples of the organic pigment include azo pigments, polycyclic pigments, dye chelates, nitro pigments, nitroso pigments, and aniline black. Examples of the inorganic pigment include titanium oxide, iron oxide, calcium carbonate, barium sulfate, aluminum hydroxide, barium yellow, cadmium red, chrome yellow, and carbon black. One of these colorants may be used individually, or two or more of these colorants may be used as a mixture.

Examples of the dye include azo dyes, benzoquinone dyes, naphthoquinone dyes, anthraquinone dyes, cyanine dyes, squarylium dyes, croconium dyes, merocyanine dyes, stilbene dyes, diarylmethane dyes, triarylmethane dyes, fluoran dyes, spiropyran dyes, phthalocyanine dyes, indigo dyes such as indigoid, fulgide dyes, nickel complex dyes, and azulene dyes.

The content of the colorant can be set as not less than 0.05 mass% and not more than 20 mass% relative to the total amount of the ink, but is not specifically limited thereto. When the content of the colorant is within the range set forth above, this enables a good balance of dispersion stability and coloring strength of the colorant.

### <Pigment dispersant>

The pigment dispersant that is optionally contained in the presently disclosed ink can be any commonly known surfactant that is used as a pigment dispersant in various inks, for example, without any specific limitations. The pigment dispersant is a substance having a function of improving dispersibility of a pigment in the ink by adhering to part of the surface of the pigment.

The surfactant may be a cationic surfactant, an anionic surfactant, a non-ionic surfactant, an amphoteric surfactant, a silicone-based surfactant, a fluorine-based surfactant, or the like. For example, those described in JP7366311B1 can be used.

The content of the pigment dispersant can be set as not less than 0.1 mass% and not more than 15 mass% relative to the total amount of the ink, but is not specifically limited thereto.

### <Other components>

Examples of other components that are optionally contained in the presently disclosed ink include foam inhibitors (defoamers), pH modifiers, preservatives and fungicides, chelating reagents, rust inhibitors, antioxidants, ultraviolet absorbers, oxygen absorbers, light stabilizers, and so forth, and those described in JP2023-067770A, for example, can be used.

### <Properties of ink>

The surface tension of the ink is preferably 20 mN/m or more, and more preferably 30 mN/m or more, and is preferably 40 mN/m or less, and more preferably 35 mN/m or less.

When the surface tension of the ink is not less than any of the lower limits set forth above, dripping can be inhibited. Moreover, when the surface tension of the ink is not more than any of the upper limits set forth above, coatability onto a substrate can be improved.

Note that the surface tension referred to in the present disclosure can be measured by a method described in the EXAMPLES section.

### <Application>

The presently disclosed ink can be used as an ink for an inkjet printer, an ink for a thermal printer, an ink for letterpress printing, an ink for offset printing, an ink for flexographic printing, an ink for gravure printing, an ink for silk printing, an ink for a writing implement, or the like. In particular, the presently disclosed ink can suitably be used as a security ink for preventing counterfeiting using a near-infrared image due to the presently disclosed ink having excellent near-infrared absorption ability.

### <Production method>

The presently disclosed ink can be produced by mixing the components described above, for example, without any specific limitations.

### (Coating material)

The presently disclosed coating material contains a near-infrared absorbing material, a resin, and a solvent and may optionally further contain one or more components selected from the group consisting of a colorant and other components.

### <Near-infrared absorbing material>

The near-infrared absorbing material that is contained in the presently disclosed coating material can be the presently disclosed near-infrared absorbing material set forth above.

The concentration of the near-infrared absorbing material (copper-containing oxidized cellulose nanofibers) in the coating material is preferably 0.20 mass% or more, and more preferably 0.25 mass% or more, and is preferably 0.40 mass% or less, and more preferably 0.35 mass% or less. When the concentration of the near-infrared absorbing material in the coating material is within any of the ranges set forth above, dispersibility of the copper-containing oxidized cellulose nanofibers can be ensured. Moreover, the change of visibility of a display item due to compounding of the near-infrared absorbing material (i.e., a difference in coloring between a section containing the presently disclosed near-infrared absorbing material and a section not containing the presently disclosed near-infrared absorbing material) can be suppressed. For example, in a case in which the presently disclosed coating material is a transparent coating material in which a colorant is not compounded, coloring caused by compounding of the near-infrared absorbing material can be suppressed, and visibility of an obtained display item (coated item) to the naked eye can be reduced. Consequently, the presently disclosed coating material can more suitably be used as a security coating material.

### <Resin>

The resin that is compounded in the presently disclosed coating material is a component that forms a coating film together with the near-infrared absorbing material when the coating material is dried. A commonly known resin that can be used in coating materials can be adopted as the resin. Examples of the resin include, but are not specifically limited to, an acrylic resin, a polyester resin, an alkyd resin, a urethane resin, an epoxy resin, a vinyl chloride resin, a vinyl chloride-vinyl acetate copolymer resin, a polyamide resin, a melamine resin, an olefin resin, and a cycloolefin resin. The resin may be one type of resin used individually or may be two or more types of resins used in combination.

The proportional content of the resin (solid content) in the coating material can be set as not less than 5 parts by mass and not more than 70 parts by mass relative to 100 parts by mass of solid content in the coating material.

### <Solvent>

The solvent that is contained in the presently disclosed coating material can be any of those that were previously described in the "Ink" section without any specific limitations.

### <Colorant>

The colorant that is optionally contained in the presently disclosed coating material can be any of those that were previously described in the "Ink" section without any specific limitations.

The content of the colorant can be set as not less than 1 mass% and not more than 20 mass% relative to the total amount of the coating material, but is not specifically limited thereto. When the content of the colorant is within any of the ranges set forth above, this enables a good balance of dispersion stability and coloring strength of the colorant.

### <Other components>

Examples of other components that are optionally contained in the presently disclosed coating material include siccatives, curing agents, curing accelerators, thickeners, anti-settling agents, anti-cissing agents, anti-sagging agents, spreading agents, defoamers, ultraviolet absorbers, light stabilizers, and so forth.

The content of other components can be set as not less than 1 mass% and not more than 50 mass% relative to the total amount of the coating material, but is not specifically limited thereto.

### <Production method>

The presently disclosed coating material can be produced by mixing the components described above, for example, without any specific limitations.

### (Shaped item)

The presently disclosed shaped item is obtained through shaping of the presently disclosed near-infrared absorbing material set forth above into any shape. Consequently, the presently disclosed shaped item has excellent near-infrared absorption ability. Although no specific limitations are made, the presently disclosed shaped item is preferably a film.

### <Properties>

Preferred attributes (light transmittance, etc.) that the presently disclosed shaped item can have are the same as those previously described in the "Near-infrared absorbing material" section.

In a case in which the presently disclosed shaped item is a film, the thickness of the film is preferably 10 µm or more, more preferably 20 µm or more, and even more preferably 30 µm or more, and is preferably 100 µm or less, more preferably 70 µm or less, and even more preferably 55 µm or less.

When the thickness of the film is not less than any of the lower limits set forth above, near-infrared absorption ability of the film can be improved. On the other hand, when the thickness of the film is not more than any of the upper limits set forth above, transparency of the film can be improved.

The "thickness" of the film referred to in the present specification can be measured according to a method described in the EXAMPLES section.

### <Production method>

The presently disclosed shaped item can be obtained, for example, by a method including a dispersing step of dispersing copper-containing oxidized cellulose nanofibers that have a number-average fiber diameter of 100 nm or less and contain copper as a salt in a dispersion medium to obtain a dispersion liquid, and a drying step of drying the dispersion liquid to obtain the shaped item. This production method may optionally further include steps other than the dispersing step and the drying step (hereinafter, also referred to as "other steps"). Examples of other steps include a defoaming step of removing dissolved gas from the dispersion liquid obtained in the dispersing step and an application step of applying the dispersion liquid to obtain a coating film before the drying step.

### <Dispersing step>

In the dispersing step, copper-containing oxidized cellulose nanofibers that have a number-average fiber diameter of 100 nm or less and contain copper as a salt are dispersed in a dispersion medium to obtain a dispersion liquid.

The copper-containing oxidized cellulose nanofibers that contain copper as a salt can be those that were previously described.

Note that in a case in which the copper-containing oxidized cellulose nanofibers have been obtained in the form of a dispersion liquid in production of the copper-containing oxidized cellulose nanofibers, the dispersion liquid can be used in that form in production of the presently disclosed shaped item.

The solid content concentration of the copper-containing oxidized cellulose nanofibers in the dispersion liquid is preferably 0.1 mass% or more, and more preferably 0.2 mass% or more, and is preferably 2.0 mass% or less, more preferably 1.0 mass% or less, and even more preferably 0.5 mass% or less.

When the solid content concentration of the copper-containing oxidized cellulose nanofibers in the dispersion liquid is not less than any of the lower limits set forth above, a shaped item can be efficiently obtained.

On the other hand, when the solid content concentration of the copper-containing oxidized cellulose nanofibers in the dispersion liquid is not more than any of the upper limits set forth above, this results in a good dispersion state of the dispersion liquid and can effectively suppress non-uniformity of dimensions of an obtained shaped item.

Note that the solid content concentration of the copper-containing oxidized cellulose nanofibers in the dispersion liquid can be adjusted through the used amount of the subsequently described dispersion medium or by concentrating a dispersion liquid having a low solid content concentration using an evaporator or the like.

No specific limitations are placed on the dispersion medium that is used in the dispersion liquid so long as it enables dispersion of the copper-containing oxidized cellulose nanofibers. Although any solvent (dispersion medium) that was previously described in the "Ink" section can be used, for example, water is preferable because this enables good dispersion of the copper-containing oxidized cellulose nanofibers in the dispersion liquid and can improve producibility of a shaped item. When water is used as the dispersion medium, in a situation in which the copper-containing oxidized cellulose nanofibers have been obtained in the form of a water dispersion in production of the copper-containing oxidized cellulose nanofibers, for example, the water that is contained in the dispersion liquid may be water originating from that water dispersion.

### <Drying step>

In the drying step, the dispersion liquid obtained in the dispersing step is dried to obtain a shaped item. The shaped item that is obtained in this step may be taken to be the presently disclosed shaped item.

Note that drying of the dispersion liquid can be performed after the dispersion liquid has been loaded into a vessel having a specific shape matching the shape of the shaped item that is to be obtained, for example.

Although no specific limitations are placed on the drying temperature of the dispersion liquid so long as it is a temperature at which the dispersion medium evaporates, the drying temperature is preferably 20°C or higher, more preferably 30°C or higher, and even more preferably 35°C or higher.

On the other hand, the drying temperature of the dispersion liquid is preferably 60°C or lower, more preferably 50°C or lower, and even more preferably 45°C or lower because this means that sudden drying can be restricted, discoloration of an obtained shaped item can be effectively inhibited, and smoothness can be improved.

The relative humidity during drying is preferably 50% or higher, more preferably 60% or higher, and even more preferably 70% or higher, and is preferably 95% or lower, more preferably 90% or lower, and even more preferably 85% or lower.

When the relative humidity during drying is not lower than any of the lower limits set forth above, smoothness of an obtained shaped item can be improved.

On the other hand, when the relative humidity during drying is not higher than any of the upper limits set forth above, the rate of drying can be increased, and producibility of a shaped item can be improved.

The drying time is normally not less than 1 day and not more than 5 days, but is not specifically limited thereto.

Note that the drying can be performed using a dryer with which it is possible to simultaneously control temperature and humidity, such as a constant-temperature constant-humidity tank, but is not specifically limited to being performed in this manner.

### (Display item)

The presently disclosed display item is a display item that is formed using the presently disclosed ink, coating material, or shaped item set forth above. The presently disclosed display item has excellent near-infrared absorption ability as a result of containing the presently disclosed near-infrared absorbing material set forth above. Consequently, the presently disclosed display item can suitably be used in an article such as security printed matter. Preferred attributes (light transmittance, etc.) that the presently disclosed display item can have are the same as those previously described in the "Near-infrared absorbing material" section.

### <Display item in which ink is used>

In a case in which the presently disclosed ink set forth above is used, the presently disclosed display item is a dried product of the ink and can be obtained by, for example, applying the ink onto a desired substrate such as paper or a film by any method and then drying the ink. The display item can be a number, text, a picture, or a combination thereof, for example, without any specific limitations.

The substrate can be a substrate that is commonly known as a recording medium such as paper or a plastic film, for example, without any specific limitations.

The display item can be formed through printing by offset printing, relief printing, flexographic printing, gravure printing, inkjet printing, or the like, or using a writing implement such as a pen or a brush.

The thickness of the display item in which the presently disclosed ink is used can be set as not less than 0.01 µm and not more than 100 µm, but is not specifically limited thereto.

### <Display item in which coating material is used>

In a case in which the presently disclosed coating material is used, the presently disclosed display item is a dried product of the coating material and can be obtained as a coating film that is formed by applying the coating material onto a substrate by any method and then drying the coating material, for example. The display item can be a number, text, a picture, or a combination thereof, for example, without any specific limitations.

The substrate can be a commonly known substrate that can be coated with a coating material such as paper, a wood sheet, a metal sheet, a plastic sheet, or glass, for example, without any specific limitations.

The display item (coating film) can be formed by any method such as brush coating without any specific limitations.

The thickness of the coating film can be set as not less than 0.01 µm and not more than 100 µm, but is not specifically limited thereto.

### <Display item in which shaped item is used>

In a case in which the presently disclosed shaped item set forth above is used, the display item is the shaped item itself or an item obtained by further processing the shaped item into a desired shape. For example, in a case in which the shaped item is produced as a film, the display item can be obtained by processing such as cutting the film into a desired shape (number, text, picture, combination thereof, etc.) and then optionally affixing the processed film onto a substrate, for example.

The substrate can be any of those that were previously described in the "Display item in which ink is used" and "Display item in which coating material" is used sections without any specific limitations.

The thickness of the display item in which the presently disclosed shaped item is used can be set as not less than 0.1 µm and not more than 100 µm, but is not specifically limited thereto.

### (Article)

The presently disclosed article is an article that includes the presently disclosed display item set forth above. Specifically, in a case in which the presently disclosed display item set forth above includes a substrate, that display item corresponds to the presently disclosed article. The substrate is the same as previously described in the "Display item" section.

The presently disclosed article has excellent near-infrared absorption ability as a result of containing the presently disclosed near-infrared absorbing material set forth above. Consequently, the presently disclosed article can suitably be used as a security article or the like. Preferred attributes (light transmittance, etc.) that the display item included in the presently disclosed article can have are the same as those previously described in the "Near-infrared absorbing material" section.

### (Method of distinguishing authenticity of article)

The presently disclosed method of distinguishing authenticity of an article includes using the presently disclosed near-infrared absorbing material set forth above to impart, to an authentic article, a mark that cannot be visually distinguished (mark imparting step); acquiring a near-infrared image of an article that is an inspection subject (near-infrared image acquisition step); and judging an article displaying the mark in the near-infrared image to be an authentic article and judging an article not displaying the mark in the near-infrared image to be an inauthentic article (judgment step). Through the presently disclosed method of distinguishing authenticity of an article, it is possible to easily distinguish authenticity of an article.

### <Mark imparting step>

In the mark imparting step, the presently disclosed near-infrared absorbing material set forth above is used to form a mark that cannot be visually distinguished on at least part of an article that is an authentic article. The mark that cannot be visually distinguished can be a mark that is transparent and not visible (cannot be seen by the naked eye) or a mark that cannot be visually distinguished (differentiated) from a display item (number, text, picture, combination thereof, etc. that is formed of a material not containing the presently disclosed near-infrared absorbing material) included in the article. The mark that cannot be visually distinguished can be a number, text, a picture, or a combination thereof without any specific limitations. Moreover, the article may be printed matter such as a passport, a security, an identity document, a card, or a pass, for example, without any specific limitations. In particular, by adopting a mark that is transparent and not visible, it is possible to impart the mark without interfering with the design of the article.

The mark that cannot be visually distinguished can be formed using the presently disclosed ink, coating material, or shaped item set forth above, for example.

In a case in which the presently disclosed ink is used, the mark can be formed by imparting the presently disclosed ink onto at least part of the article in a specific pattern (for example, a number, text, picture, or combination thereof) by the inkjet method or the like and then drying the presently disclosed ink. Moreover, in a case in which the presently disclosed coating material is used, the mark can be formed by imparting the presently disclosed coating material onto at least part of the article in a specific pattern (for example, a number, text, picture, or combination thereof) by any method and then drying the presently disclosed coating material. Furthermore, in a case in which the presently disclosed shaped item is used, the mark is obtained by forming, on at least part of the article, the presently disclosed shaped item set forth above itself or an item obtained by processing the shaped item into a specific pattern (for example, a number, text, picture, or combination thereof).

### <Near-infrared image acquisition step>

In the near-infrared image acquisition step, a near-infrared image of an article that is an inspection subject is acquired. The near-infrared image can be obtained by imaging the article using a near-infrared camera or the like without any specific limitations. From a viewpoint of facilitating judgment of the presence or absence of the aforementioned mark in the near-infrared image in the judgment step, the article may be further irradiated with light including near-infrared radiation while being imaged. Moreover, although the imaging may be performed in the dark or under fluorescent lighting, the imaging is preferably performed in the dark from a viewpoint of easily distinguishing the presence or absence of the mark in the judgment step.

### <Judgment step>

In the judgment step, an article displaying the mark in the near-infrared image obtained in the near-infrared image acquisition step is judged to be an authentic article and an article not displaying the mark in the near-infrared image is judged to be an inauthentic article. This judgment can be performed visually.

In this manner, the presently disclosed method of distinguishing authenticity of an article can be used to suitably distinguish authenticity of an article such as a passport, a security, an identity document, a card, a pass, or other such security printed matter (anti-counterfeit printed matter).

### EXAMPLES

The following provides a more specific description of the present disclosure based on examples. However, the present disclosure is not limited to the following examples. In the following description, "%" and "parts" used in expressing quantities are by mass, unless otherwise specified. Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

### <Surface tension of dispersion liquid>

The surface tension of dispersion liquids produced in Examples 1-1 to 1-8 and Comparative Examples 1-1 to 1-4 was calculated by the Young-Laplace method as a value after 5 minutes had passed using a portable contact angle meter PCA-11 produced by Kyowa Interface Science Co., Ltd.

### <Dispersibility of dispersion liquid>

The dispersibility of dispersion liquids produced in Examples 1-1 to 1-8 and Comparative Examples 1-1 to 1-4 was measured by the following method and was evaluated by the following standard.

### [Measurement method of dispersibility]

The dispersion liquid was thoroughly shaken by hand, and then the transparency of the dispersion liquid was visually checked.
A: Dispersion liquid is transparent
B: Dispersion liquid is slightly turbid
C: Dispersion liquid contains precipitate

### <Thickness of film>

The thickness of films produced in the examples and comparative examples was measured using a Digimatic Thickness Gauge (ID-C112XBS produced by Mitutoyo Corporation).

### <Observation of text by naked eye>

Text produced in Examples 1-1 to 1-8 and Comparative Examples 1-1 to 1-4 was observed by the naked eye and was evaluated by the following standard.
A: Text almost invisible both as is and when sample is placed on white copy paper
B: Text not visible as is but faintly visible when sample is placed on white copy paper
C: Text clearly visible

### <Near-infrared absorption ability (near-infrared transmittance)>

The transmittance of light having a wavelength of 800 nm by text and films produced in the examples and comparative examples was measured using a UV/VIS/NIR spectrophotometer (V-570 produced by JASCO Corporation). A lower transmittance of light having a wavelength of 800 nm indicates better near-infrared absorption ability.

### <Near-infrared image of text>

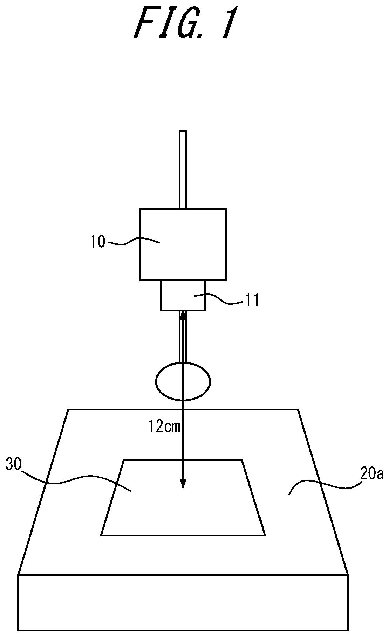

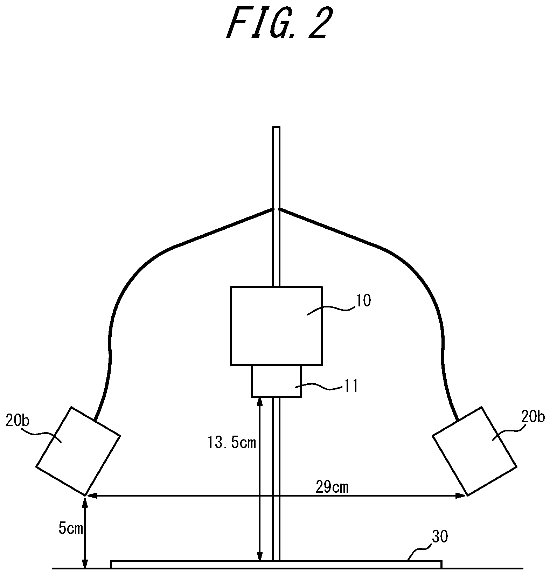

A near-infrared image of text of Examples 1-1 to 1-8 and Comparative Examples 1-1 to 1-4 was taken using an imaging device 1 of FIG. 1 or an imaging device 2 of FIG. 2 and was evaluated by the following standard.
A: Text clearly recognizable
B: Text faint but recognizable
C: Text unrecognizable

### <Near-infrared image of film>

A near-infrared image of films of Examples 2-1 to 2-4 and Comparative Examples 2-1 to 2-9 was taken using the imaging device 1 of FIG. 1 and was evaluated by the following standard.
A: Black and clearly observable
B: Faint black and observable
C: Transparent and same color as background

### (Example 1-1)

### <Production of sodium-containing TEMPO-oxidized cellulose nanofiber water dispersion>

An amount of softwood bleached kraft pulp equivalent to 1 g in terms of dry weight, 5 mmol of sodium hypochlorite, 0.1 g (1 mmol) of sodium bromide, and 0.016 g (1 mmol) of TEMPO (2,2,6,6-tetramethylpiperidine-1-oxyl) were dispersed in 100 mL of water, were gently stirred at room temperature for 4 hours, and were then washed with distilled water to yield TEMPO catalyst-oxidized pulp (oxidized cellulose). Note that the carboxy group content of the obtained TEMPO catalyst-oxidized pulp was 1.4 mmol/g.

Thereafter, distilled water was added to the undried TEMPO catalyst-oxidized pulp to produce a water dispersion having a solid content concentration of 0.1%. The water dispersion was subjected to defibration treatment for 2 minutes at 7.5 × 1,000 rpm using a homogenizer (PHYSCOTRON produced by Microtec Nition) and for 4 minutes at V-LEVEL4 and TIP26D using an ultrasonic homogenizer (Ultrasonic Generator produced by Nissei Corporation) while cooling around the vessel with ice so as to obtain a water dispersion containing TEMPO-carboxylated cellulose nanofibers as TEMPO-oxidized cellulose nanofibers. Thereafter, a non-defibrated component was removed from the TEMPO-carboxylated cellulose nanofiber water dispersion by centrifugal separation (12000G (120 × 100 rpm/g), 10 minutes, 12°C) using a centrifuge (M201-1VD produced by Sakuma Seisakusho, Co., Ltd., angle rotor 50F-8AL) to yield a TEMPO-carboxylated cellulose nanofiber water dispersion of 0.1 mass% in concentration that was a transparent liquid. Note that the TEMPO-carboxylated cellulose nanofibers contained sodium originating from the co-oxidant as a salt. In other words, the operations described above yielded a sodium-containing TEMPO-oxidized cellulose nanofiber (hereinafter, also referred to simply as "TOCN-Na") water dispersion.

### <Production of hydrogen-substituted TEMPO-oxidized cellulose nanofiber water dispersion>

Under stirring, 1 mL of 1 M hydrochloric acid was added to 100 mL of the TOCN-Na water dispersion so as to adjust the pH to 1. The stirring was then continued for 60 minutes.

Thereafter, the TEMPO-carboxylated cellulose nanofibers that had undergone gelation through addition of the hydrochloric acid were collected by centrifugal separation (12,000G), and the collected TEMPO-carboxylated cellulose nanofibers were sequentially washed with 1 M hydrochloric acid and a large amount of distilled water.

Next, 100 mL of distilled water was added to obtain a hydrogen-substituted TEMPO-carboxylated cellulose nanofiber (hereinafter, also referred to simply as "TOCN-H") water dispersion of 0.1 mass% in concentration in which hydrogen-substituted TEMPO-carboxylated cellulose nanofibers were dispersed. Note that when carboxy groups at the surface of the TOCN-H were measured by FT-IR (FT/IR-6100 produced by JASCO Corporation) according to Biomacromolecules (2011, Vol. 12, pp. 518-522), 90% or more had been substituted to a carboxylic acid form.

### <Production of copper-containing TEMPO-oxidized cellulose nanofiber water dispersion>

50 g of the TOCN-H water dispersion of 0.1 mass% in concentration described above was stirred, 18 g of a copper(II) acetate aqueous solution of 0.1 mass% in concentration was added thereto, and stirring was then continued at room temperature for 3 hours. Thereafter, the carboxylated cellulose nanofibers that had undergone gelation due to addition of the copper(II) acetate aqueous solution were collected by centrifugal separation (12000G (120 × 100 rpm/g), 10 minutes, 12°C) using a centrifuge (M201-1VD produced by Sakuma Seisakusho, Co., Ltd., angle rotor 50F-8AL), the collected cellulose nanofibers were washed using a copper(II) acetate aqueous solution of 0.1 mass% in concentration, and then the cellulose nanofibers were washed using a large amount of distilled water.

Thereafter, 50 mL of distilled water was added, and an ultrasonic homogenizer (Ultrasonic Generator produced by Nissei Corporation) was used to perform ultrasonication (2 minutes) at V-LEVEL4 and TIP26D while cooling around the vessel with ice so as to disperse the TEMPO-carboxylated cellulose nanofibers that had been substituted with copper ions. Thereafter, a non-defibrated component was removed from the water dispersion of TEMPO-carboxylated cellulose nanofibers substituted with copper ions by centrifugal separation (12000G (120 × 100 rpm/g), 10 minutes, 12°C) using a centrifuge (M201-1VD produced by Sakuma Seisakusho, Co., Ltd., angle rotor 50F-8AL). In this manner, a copper-containing TEMPO-oxidized cellulose nanofiber (hereinafter, also referred to simply as "TOCN-Cu") water dispersion having a solid content concentration of 0.1 mass% was obtained. This water dispersion was subsequently concentrated using an evaporator to obtain a TOCN-Cu water dispersion having a solid content concentration of 0.34 mass%. The surface tension and dispersibility of this water dispersion as an ink were evaluated. The results are shown in Table 1.

This water dispersion was taken into a dropper and was used to write text on a PET film (G2R produced by Toyobo Co., Ltd.; both side primer treated). This PET film was dried in an 80°C oven for 1 hour to obtain a PET film including text formed of a dried product of the water dispersion as a sample. This text was evaluated for observation by the naked eye and near-infrared absorption ability. Moreover, a near-infrared image of the display item was taken using an imaging device 1 having the following configuration illustrated schematically in FIG. 1 and was evaluated. The results are shown in Table 1. Note that in FIG. 1, reference sign 10 indicates a camera, reference sign 11 indicates a lens, reference sign 20a indicates LED panel lighting, and reference sign 30 indicates a sample.

### <Imaging device 1>

LED panel lighting: TMN150x180-22IR850D-4 (produced by AITEC SYSTEM Co., Ltd.); wavelength region (750 nm to 900 nm) 850 nm peak; illuminance 15.23 mW/cm²
Camera: a2A1920-160umBAS (produced by Basler); wavelength region 400 nm to 1000 nm, 600 nm peak
Lens: EMVL-MP420 produced by Basler

### (Example 1-2)

Operations were performed in the same way as in Example 1-1 with the exception that a near-infrared image was taken using an imaging device 2 having the following configuration illustrated schematically in FIG. 2 instead of the imaging device 1. The results are shown in Table 1. Note that in FIG. 2, reference sign 10 indicates a camera, reference sign 11 indicates a lens, reference sign 20b indicates LED bar lighting, and reference sign 30 indicates a sample.

### <Imaging device 2>

LED bar lighting: TLWA325x41-221R850D-4 (produced by AITEC SYSTEM Co., Ltd.) × 2; wavelength range (750 nm to 900 nm) 850 nm peak; illuminance 23.16 mW/cm²
Camera: a2A1920-160umBAS (produced by Basler); wavelength region 400 nm to 1000 nm, 600 nm peak
Lens: EMVL-MP420 (produced by Basler)

### (Example 1-3)

Operations were performed in the same way as in Example 1-1 with the exception that 0.25 g of ethanol was added to 1.25 g of the TOCN-Cu water dispersion in Example 1-1 and stirred therewith to obtain a TOCN-Cu dispersion liquid of 0.28 mass% in concentration having TOCN-Cu dispersed in a mixed solvent of water/ethanol = 4/1 (mass ratio). The results are shown in Table 1.

### (Example 1-4)

Operations were performed in the same way as in Example 1-3 with the exception that a near-infrared image was taken using the imaging device 2 instead of the imaging device 1. The results are shown in Table 1.

### (Example 1-5)

Operations were performed in the same way as in Example 1-1 with the exception that 0.73 g of ethanol was added to 1.25 g of the TOCN-Cu water dispersion in Example 1-1 and stirred therewith to obtain a TOCN-Cu dispersion liquid of 0.24 mass% in concentration having TOCN-Cu dispersed in a mixed solvent of water/ethanol = 2/1 (mass ratio). The results are shown in Table 1.

### (Example 1-6)

Operations were performed in the same way as in Example 1-5 with the exception that a near-infrared image was taken using the imaging device 2 instead of the imaging device 1. The results are shown in Table 1.

### (Example 1-7)

Operations were performed in the same way as in Example 1-1 with the exception that white synthetic paper (SDI80 produced by Yupo Corporation) was used instead of a PET film. The results are shown in Table 1.

### (Example 1-8)

Operations were performed in the same way as in Example 1-7 with the exception that a near-infrared image was taken using the imaging device 2 instead of the imaging device 1. The results are shown in Table 1.

### (Comparative Example 1-1)

Operations were performed in the same way as in Example 1-1 with the exception that a TOCN-Na dispersion liquid produced as described below was used instead of a TOCN-Cu water dispersion. The results are shown in Table 1.

### <Production of TOCN-Na dispersion liquid>

The TOCN-Na water dispersion of 0.1 mass% in concentration that was produced in Example 1-1 was concentrated to a solid content concentration of 0.34% using an evaporator to obtain a TOCN-Na water dispersion having a solid content concentration of 0.34%. 0.25 g of ethanol was added to 1.25 g of this TOCN-Na water dispersion and stirred therewith to obtain a TOCN-Na dispersion liquid of 0.28 mass% in concentration having TOCN-Na dispersed in a mixed solvent of water/ethanol = 4/1 (mass ratio).

### (Comparative Example 1-2)

Operations were performed in the same way as in Comparative Example 1-1 with the exception that a near-infrared image was taken using the imaging device 2 instead of the imaging device 1. The results are shown in Table 1.

### (Comparative Example 1-3)

Operations were performed in the same way as in Comparative Example 1-1 with the exception that white synthetic paper (SDI80 produced by Yupo Corporation) was used instead of a PET film. The results are shown in Table 1.

### (Comparative Example 1-4)

Operations were performed in the same way as in Comparative Example 1-3 with the exception that a near-infrared image was taken using the imaging device 2 instead of the imaging device 1. The results are shown in Table 1.

**[Table 1]**

| | | | Example 1-1 | Example 1-2 | Example 1-3 | Example 1-4 | Example 1-5 | Example 1-6 | Example 1-7 | Example 1-8 | Comparative Example 1-1 | Comparative Example 1-2 | Comparative Example 1-3 | Comparative Example 1-4 |
|---|---|---|---|---|---|---|---|---|---|---|---|---|---|---|
| Dispersion liquid | Near-infrared absorbing material | CNF | Carboxylated CNF | Carboxylated CNF | Carboxylated CNF | Carboxylated CNF | Carboxylated CNF | Carboxylated CNF | Carboxylated CNF | Carboxylated CNF | Carboxylated CNF | Carboxylated CNF | Carboxylated CNF | Carboxylated CNF |
| | | Counter ion | Cu ion | Cu ion | Cu ion | Cu ion | Cu ion | Cu ion | Cu ion | Cu ion | Na ion | Na ion | Na ion | Na ion |
| | Dispersion medium | | Water | Water | Water/ethanol = 4/1 | Water/ethanol = 4/1 | Water/ethanol = 2/1 | Water/ethanol = 2/1 | Water | Water | Water/ethanol = 4/1 | Water/ethanol = 4/1 | Water/ethanol = 4/1 | Water/ethanol = 4/1 |
| | Concentration of near-infrared absorbing material (mass%) | | 0.34 | 0.34 | 0.28 | 0.28 | 0.24 | 0.24 | 0.34 | 0.34 | 0.28 | 0.28 | 0.28 | 0.28 |
| | Surface tension (mN/m) | | 34.1 | 34.1 | 39.54 | 39.54 | 34.99 | 34.99 | 34.1 | 34.1 | 68.5 | 68.5 | 68.5 | 68.5 |
| | Dispersion state | | A | A | B | B | C | C | A | A | B | B | B | B |
| Text | Thickness (µm) | | 10 | 10 | 5 | 5 | 3 | 3 | 10 | 10 | 5 | 5 | 5 | 5 |
| Substrate | | | PET film | PET film | PET film | PET film | PET film | PET film | Synthetic paper | Synthetic paper | PET film | PET film | Synthetic paper | Synthetic paper |
| Imaging device | | | 1 | 2 | 1 | 2 | 1 | 2 | 1 | 2 | 1 | 2 | 1 | 2 |
| Evaluation | Visibility of text by naked eye observation | | B | | A | | A | | C | | A | | A | |
| | Near-infrared (wavelength 800 nm) transmittance (%) | | 66.3 | | 81.7 | | 85.4 | | 0.08 | | 87.83 | | 0.09 | |
| | Near-infrared image | | A | A | A | A | B | B | A | A | C | C | C | C |

In Table 1, CNF indicates cellulose nanofibers.

It can be seen from the results in Table 1 that in Examples 1-1 to 1-6 where a display item (text) was obtained through drying of a dispersion liquid produced using copper-containing oxidized cellulose nanofibers having a number-average fiber diameter of 100 nm or less and containing copper as a salt, the text has excellent near-infrared absorption ability and can be recognized well in a near-infrared image. Note that the reason the transmittance of near-infrared radiation was significantly lower in Examples 1-7 and 1-8 and Comparative Examples 1-3 and 1-4 is presumed to be due to the synthetic paper used as a substrate having high absorbance of near-infrared radiation.

### (Example 2-1)

### <Production of copper-containing TEMPO-oxidized cellulose nanofiber water dispersion>

A TOCN-Cu water dispersion having a solid content concentration of 0.34 mass% was obtained in the same way as in Example 1-1.

### <Production of film>

The TOCN-Cu water dispersion obtained above was loaded in an amount of 20 g into a 60 mm non-treated dish for tissue culture produced by AGC TECHNO GLASS Co., Ltd. Next, this non-treated dish for tissue culture was placed in a constant-temperature constant-humidity tank having a temperature of 40°C and a relative humidity of 80% for 4 days to obtain a transparent film having a smooth surface.

The obtained film was used as a sample to perform various measurements and evaluations. The results are shown in Table 2.

### (Examples 2-2 to 2-4)

Operations were performed in the same way as in Example 2-1 with the exception that the thickness of the film was changed as indicated in Table 2. The results are shown in Table 2.

### (Comparative Example 2-1)

Operations were performed in the same way as in Example 2-1 with the exception that a TOCN-Na water dispersion produced as described below was used instead of a TOCN-Cu water dispersion to produce a film of 23 µm in thickness. The results are shown in Table 2.

### <Production of TOCN-Na water dispersion>

The TOCN-Na water dispersion of 0.1 mass% in concentration that was produced in Example 1-1 was concentrated to a solid content concentration of 0.34% using an evaporator to obtain a TOCN-Na water dispersion having a solid content concentration of 0.34%.

### (Comparative Examples 2-2 to 2-3)

Operations were performed in the same way as in Comparative Example 2-1 with the exception that the thickness of the film was changed as indicated in Table 2.

### (Comparative Example 2-4)

Operations were performed in the same way as in Example 2-1 with the exception that an aluminum-containing TEMPO-oxidized cellulose nanofiber water dispersion produced as described below was used instead of a TOCN-Na water dispersion. The results are shown in Table 2.

### <Production of aluminum-containing TEMPO-oxidized cellulose nanofiber water dispersion>

Operations were performed in the same way as in Example 1-1 with the exception that 50 g of a 0.1 mass% TOCN-H water dispersion produced in the same way as in Example 1-1 was stirred, 26 g of an aluminum(III) chloride hexahydrate aqueous solution of 0.1% in concentration was added thereto, and these were stirred at room temperature for 3 hours.

### (Comparative Example 2-5)

Operations were performed in the same way as in Example 2-1 with the exception that a lithium-containing TEMPO-oxidized cellulose nanofiber water dispersion produced as described below was used instead of a TOCN-Na water dispersion. The results are shown in Table 2.

### <Production of lithium-containing TEMPO-oxidized cellulose nanofiber water dispersion>

Operations were performed in the same way as in Example 1-1 with the exception that 50 g of a 0.1 mass% TOCN-H water dispersion produced in the same way as in Example 1-1 was stirred, 4 g of lithium acetate of 0.1% in concentration was added thereto, and these were stirred at room temperature for 3 hours.

### (Comparative Example 2-6)

Operations were performed in the same way as in Example 2-1 with the exception that a zinc-containing TEMPO-oxidized cellulose nanofiber water dispersion produced as described below was used instead of a TOCN-Na water dispersion. The results are shown in Table 2.

### <Production of zinc-containing TEMPO-oxidized cellulose nanofiber water dispersion>

50 g of a 0.1 mass% TOCN-H water dispersion produced in the same way as in Example 1-1 was stirred, 20 g of zinc acetate of 0.1% in concentration was added thereto, and these were stirred at room temperature for 3 hours. With the exception of the above, operations were performed in the same way as in Example 1-1.

### (Comparative Example 2-7)

Operations were performed in the same way as in Example 2-1 with the exception that a TAC (triacetyl cellulose) film of 85 µm in thickness was used instead of the film produced in Example 2-1. The results are shown in Table 2.

### (Comparative Example 2-8)

Operations were performed in the same way as in Example 2-1 with the exception that a PET (polyethylene terephthalate) film of 53 µm in thickness was used instead of the film produced in Example 2-1. The results are shown in Table 2.

### (Comparative Example 2-9)

Operations were performed in the same way as in Example 2-1 with the exception that a COP (cycloolefin polymer) film of 53 µm in thickness was used instead of the film produced in Example 2-1. The results are shown in Table 2.

**[Table 2]**

| | | | Example 2-1 | Example 2-2 | Example 2-3 | Example 2-4 | Comparative Example 2-1 | Comparative Example 2-2 | Comparative Example 2-3 | Comparative Example 2-4 | Comparative Example 2-5 | Comparative Example 2-6 | Comparative Example 2-7 | Comparative Example 2-8 | Comparative Example 2-9 |
|---|---|---|---|---|---|---|---|---|---|---|---|---|---|---|---|
| Film | Near-infrared absorbing material | CNF | Carboxylated CNF | Carboxylated CNF | Carboxylated CNF | Carboxylated CNF | Carboxylated CNF | Carboxylated CNF | Carboxylated CNF | Carboxylated CNF | Carboxylated CNF | Carboxylated CNF | TAC film | PET film | COP film |
| | | Counter ion | Cu ion | Cu ion | Cu ion | Cu ion | Na ion | Na ion | Na ion | Al ion | Li ion | Zn ion | | | |
| | Thickness (µm) | | 55 | 31 | 16 | 6 | 23 | 16 | 6 | 5 | 8 | 9 | 85 | 53 | 40 |
| | External appearance (observation by naked eye) | | Blue/ transparent | Light blue/ transparent | Very light blue/ transparent | Colorless/ transparent | Colorless/ transparent | Colorless/ transparent | Colorless/ transparent | Colorless/ transparent | Colorless/ transparent | Colorless/ transparent | Colorless/ transparent | Colorless/ transparent | Colorless/ transparent |
| Imaging device | | | 1 | 1 | 1 | 1 | 1 | 1 | 1 | 1 | 1 | 1 | 1 | 1 | 1 |
| Evaluation | Near-infrared (wavelength 800 nm) transmittance (%) | | 44.18 | 61.57 | 80.12 | 82.18 | 84.36 | 89.35 | 89.25 | 91.91 | 86.23 | 90.2 | 92.65 | 88.31 | 93.16 |
| | Near-infrared image | | A | A | B | B | C | C | C | C | C | C | C | C | C |

In Table 2, CNF indicates cellulose nanofibers.

It can be seen from the results in Table 2 that the films of Examples 2-1 to 2-4, which were obtained using a near-infrared absorbing material composed of copper-containing oxidized cellulose nanofibers having a number-average fiber diameter of 100 nm or less and containing copper as a salt, have excellent near-infrared absorption ability and can be recognized well in a near-infrared image.

### INDUSTRIAL APPLICABILITY

According to the present disclosure, it is possible to provide a novel near-infrared absorbing material having sufficiently high near-infrared absorption ability.

Moreover, according to the present disclosure, it is possible to provide an ink and a coating material containing this near-infrared absorbing material.

Furthermore, according to the present disclosure it is possible to provide a shaped item composed of this near-infrared absorbing material.

Also, according to the present disclosure, it is possible to provide a display item obtained using this ink, coating material, or shaped item.

Moreover, according to the present disclosure, it is possible to provide an article including this display item.

Furthermore, according to the present disclosure, it is possible to provide a method of distinguishing authenticity of an article.

### REFERENCE SIGNS LIST

- 10: camera
- 11: lens
- 20a: LED panel lighting
- 20b: LED bar lighting
- 30: sample

## Claims

1. A near-infrared absorbing material composed of copper-containing oxidized cellulose nanofibers that have a number-average fiber diameter of 100 nm or less and contain copper as a salt.

2. The near-infrared absorbing material according to claim 1, wherein the copper-containing oxidized cellulose nanofibers have a number-average fiber length of not less than 50 nm and not more than 2,000 nm.

3. The near-infrared absorbing material according to claim 1, wherein the copper-containing oxidized cellulose nanofibers have an average degree of polymerization of not less than 100 and not more than 2,000.

4. The near-infrared absorbing material according to any one of claims 1 to 3, wherein the copper-containing oxidized cellulose nanofibers are copper-containing carboxylated cellulose nanofibers.

5. An ink comprising the near-infrared absorbing material according to claim 1.

6. A coating material comprising the near-infrared absorbing material according to claim 1.

7. A shaped item composed of the near-infrared absorbing material according to claim 1.

8. A display item obtained using the ink according to claim 5, the coating material according to claim 6, or the shaped item according to claim 7.

9. An article comprising the display item according to claim 8.

10. A method of distinguishing authenticity of an article comprising:
using the near-infrared absorbing material according to claim 1 to impart, to an authentic article, a mark that cannot be visually distinguished;
acquiring a near-infrared image of an article that is an inspection subject; and
judging an article displaying the mark in the near-infrared image to be an authentic article and judging an article not displaying the mark in the near-infrared image to be an inauthentic article.
